# EUROPEAN PATENT SPECIFICATION

(11) **EP 1 767 043 B1**
(45) Date of publication and mention of the grant of the patent: **19.08.2009**
(21) Application number: 05762166.6
(22) Date of filing: 21.06.2005
(51) Int. Cl.: H04W 8/00

(54) **METHOD AND APPARATUS FOR RAPIDLY LOCATING AND TRANSMITTING DATA TO A MOBILE DEVICE IN A WIRELESS COMMUNICATION NETWORK**
VERFAHREN UND GERÄT ZUM SCHNELLEN FINDEN UND SENDEN VON DATEN ZU EINER MOBILEN EINRICHTUNG IN EINEM DRAHTLOSEN KOMMUNIKATIONSNETZ
METHODE ET DISPOSITIF POUR LOCALISER ET TRANSMETTRE RAPIDEMENT DES DONNEES A UN DISPOSITIF MOBILE, DANS UN RESEAU DE COMMUNICATION SANS FIL

(30) Priority: 21.06.2004 US 581841 P; 17.06.2005 US 156178
(43) Date of publication of application: 28.03.2007
(73) Proprietor: Qualcomm Incorporated, San Diego, CA 92121 (US)
(72) Inventor: GILL, Harleen K., San Diego, CA 92130 (US); ANANTHANARAYANAN, Arulmozhi Kasi, San Diego, CA 92130 (US); RAZDAN, Ashu, San Diego, CA 92126 (US); ROSEN, Eric C., Solana Beach, CA 92075 (US)
(74) Representative: Heselberger, Johannes
(86) International application number: PCT/US2005/022024
(87) International publication number: WO 2006/002216

(56) References cited:
- EP-A- 0 446 363
- EP-A- 1 018 850
- US-A- 5 596 333
- US-A1- 2004 043 774
- US-A1- 2004 107 294

## Description

### CROSS-REFERENCE TO RELATED APPLICATION

This application claims the benefit of the provisional application, Serial No. 60/581,841, filed on June 21, 2004.

### BACKGROUND OF THE INVENTION

1. *Field of the Invention*

The invention relates to data transfer in a wireless telecommunication system and, more particularly, fast transfer of data through a signaling channel in a wireless telecommunication system with setting up a dedicated traffic channel.

2. *Description* of *the Related Art*

In wireless telecommunication systems, Push-to-talk (PTT) capabilities are becoming popular with service sectors. PTT can support a "dispatch" voice service that operates over standard commercial wireless infrastructures, such as code division multiple access (CDMA), frequency division multiple access (FDMA), time division multiple access (TDMA), and global system for mobile communications (GSM). In a dispatch model, communication between endpoints (end user devices) occurs within virtual groups, wherein the voice of one "talker" is broadcast to one or more "listeners." A single instance of this type of communication is commonly referred to as a dispatch call, or simply a PTT call. A PTT call is an instantiation of a group, which defines the characteristics of a call. A group in essence is defined by a member list and associated information, such as group name or group identification. In the absence of a wireless multicast channel, each group is formed by the combination of separate point-to-point connections between each endpoint and PTT servers manage the call. Each endpoint is also known as a client.

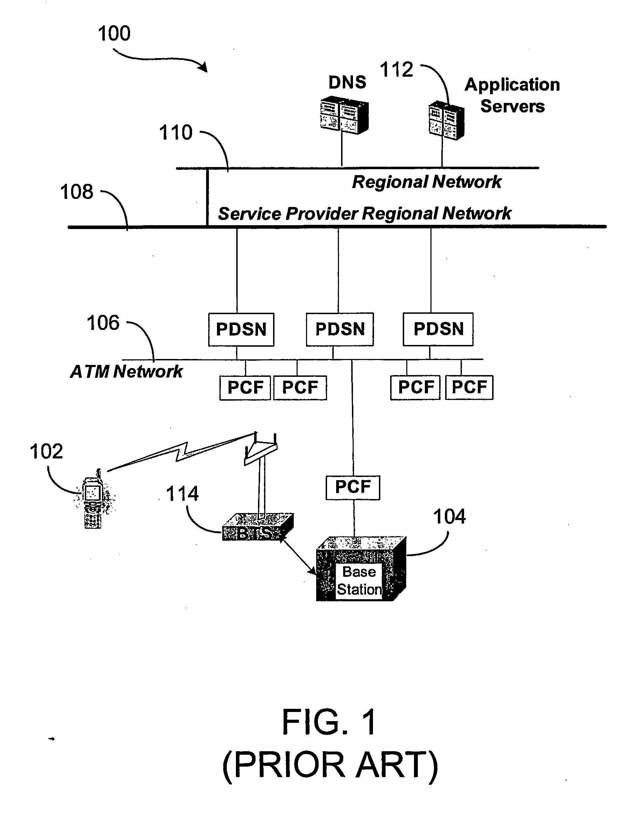

FIG. 1 illustrates a prior art architecture 100 supporting PTT communications. The architecture includes the deployment of a single PTT server region in conjunction with a carrier's CDMA infrastructure and packet data network. Each region of the PTT servers is deployed over a specific portion of a carrier packet data network. The PTT server within the region may be routing traffic between one or more Packet Data Service Nodes (PDSNs) in the carrier network. A communication device 102 that supports the PTT feature is in communication with a base station (BS) 104. Each BS 104 may be in communication with one or more base transmission stations (BTS) 114. The base station 104 is in communication with a high speed network 106 and PTT communications received from the communication device 102 is sent through the base station 104 and the network 106 to a packet data service node (PDSN). The PDSN communicates with the high speed network 106 and a PTT server's network 108, which is connected to a PTT network 110. The PDSN forwards the PTT communications to a PTT server 112 in the PTT network 110.

The PTT server 112 handles PTT communications among members of a PTT group. The PTT server 112 receives a PTT communication from one member and forwards it to all members of the PTT group. The PTT communication is usually received as data packets from the network 110, and the PTT communication sent out by the PTT server 112 are also in data packet format. A packet data service node (PDSN) and a connected base station (BS) then established through a BTS 114 a dedicated channel to transmit the PTT communication to a receiving mobile client (a PTT member).

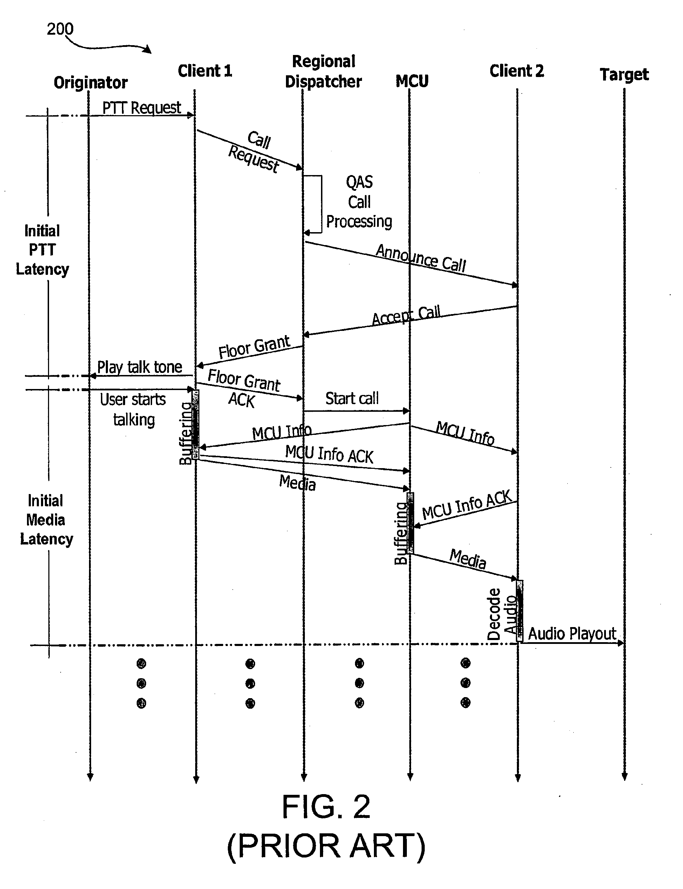

FIG. 2 illustrates a prior art message flow 200 for a PTT call set up. When a PTT user (originator) is ready to make a PTT communication, he presses a PTT activation button on his mobile device 102 and a PTT request is thus made. In response to the PTT request received by the mobile device 102, and the mobile device sends a call request to the PTT server 112, which is also known as the PTT dispatcher. The PTT server 112 receives the call request and process the call request. The call request processing includes identifying the PTT user, identifying a PTT group to which the PTT user belongs, identifying member of this PTT group, and preparing announce call messages to be sent to each member of the PTT group.

After the PTT server 112 sends the announce call messages, each announce call message is received by a PDSN and forwarded by the PDSN to a BS 104. The BS 104 broadcasts the announce call message to all the sectors covered by the BTS 114 connected to the BS 104. If a mobile client who is a targeted receiver is available, the mobile client sends an accept call message back to the PTT server 112. After receiving the accept call message from at least one mobile client, the PTT server 112 sends a floor grant message back to the originating mobile client. There may be more than one targeted user in the originator's PTT communication group, and the PTT server 112 will grant the floor to the originator if there is at least one targeted mobile client available. After receiving the floor grant message, the PTT requesting mobile client (originator) can then make a PTT communication.

The PTT communication set up process described above is time sensitive and the initial PTT latency shown in FIG. 2 is affected by network traffic. The long latency affects directly users of the PTT communication. Some attempts have been made to improve the set up process, and one way to speed up the PTT call set up process is to embed the call announce message in a signaling message and transmit the call announce message over the signaling channel to their targeted receivers.

Transmitting the call announce message over the signaling channel does speed up the PTT call set up process, however, it also floods the wireless communication network with signaling messages, especially when the location of a receiver is unknown and the signaling message has to be broadcasted to a large area. Therefore, it is desirous to have a system and method for enabling a targeted transmission of a signaling message to a region where a receiver is located, thus enabling fast PTT set up without flooding unnecessary the wireless communication network with signaling messages, and it is to such system and method this invention is primarily directed.

EP 1 018 850 A1 relates to a system and method for locating mobile units operating with a communication system. In one embodiment, a mobile switching center (MSC) sends a page to a mobile unit. The mobile unit responds to the page and, based upon the cell/sector from which the mobile unit responds, the serving MSC determines an approximate location of the mobile unit.

From US 2004/0043774 A1 a wireless network system and method capable of tracking a location of a mobile station is known. This document describes a base station storing location information in a visitor location register (VLR) when a mobile station executes location registration. The base station confirms a location and state of a mobile station by dummy paging and up-dates its location information stored in the VLR when the relevant mobile station keeps up an idled state during a certain period.

From US 2004/0107294 A1 a method and apparatus for mobile-terminated short data burse communication is known. This includes determining whether the information should be sent as short data burse messages while the target mobile station is in dormant mode, and sending the information to the target mobile station as short data burse messages, without waiting for the traffic channel to be reestablished.

### SUMMARY OF THE INVENTION

Apparatuses methods and computer program products according to claims 1,2,8,9,10,11 are provided which enable transmission of data through a signaling channel in a wireless telecommunication network without transmission of the IP data packets to sectors where a targeted wireless device is not located, thus avoiding flooding the network with unnecessary signaling messages. In one embodiment, there is provided a method for determining a sector location of a wireless communication device and transmitting data from a base station to the wireless communication device over a signaling channel in a wireless communication network without establishing a dedicated data access channel. The method includes broadcasting a broadcast message over a signaling channel from the base station to a plurality of sectors in communication with the base station, and receiving the broadcast message at the wireless device and sending an acknowledgement therefrom, and receiving an acknowledgment from the wireless communication device, wherein the acknowledgment is delivered with a sector location information. The method also includes transmitting data over a signaling channel from the base station to a sector identified by the sector location information. The broadcast message, when received by the wireless communication device, does not cause the wireless communication device to set up any data access channel between the wireless communication device and the base station.

In another embodiment, there is provided an apparatus for determining a sector location of a wireless communication device and transmitting data from a base station to the wireless communication device over a signaling channel in a wireless communication network without establishing a dedicated data access channel. The apparatus includes a network interface unit for receiving a first message addressed to a wireless communication device from a data network, a controller unit for analyzing the first message, and a radio interface unit for communicating with the wireless communication device through radio signals. The controller, in response to the first message, broadcasts a second message to a plurality of sectors in communications with the apparatus; broadcasting the second message causes a third message to be received from the wireless communication device, wherein the third message is delivered with a sector information. The controller, in response to the third message, transmits the first message over a signaling channel to a sector identified by the sector information.

The present apparatus and method are therefore advantageous as they enable a targeted transmission of a signaling message to a region where a receiver is located, thus enable a fast PTT set up without flooding unnecessary the wireless communication network with signaling messages, or causing the wireless devices to start opening dedicated traffic channels.

Other advantages and features of the present invention will become apparent after review of the hereinafter set forth Brief Description of the Drawings, Detailed Description of the Invention, and the Claims.

### BRIEF DESCRIPTION OF THE DRAWINGS

FIG. 1 is a prior art architecture of a wireless communication network.

FIG. 2 is a prior art message flow for setting up a PTT call.

FIG. 3 is an architecture of a base station according to one embodiment of the invention.

FIG. 4 is a flow chart of an exemplary embodiment a base station process.

### DETAIL DESCRIPTION OF THE INVENTION

In this description, the terms "communication device," "wireless device," "wireless communications device," "PTT communication device," "handheld device," "mobile device," and "handset" are used interchangeably. The terms "base station" and "base station server" are also used interchangeably. The term "application" as used herein is intended to encompass executable and nonexecutable software files, raw data, aggregated data, patches, and other code segments. The term "exemplary" means that the disclosed element or embodiment is only an example, and does not indicate any preference of user. Further, like numerals refer to like elements throughout the several views, and the articles "a" and "the" includes plural references, unless otherwise specified in the description.

In overview, the system and method enables a targeted transmission of a message from a base station to a wireless device through a signaling channel during a PTT call set up process without flooding the wireless communication network with signaling messages. Normally, when a PTT server 112 receives a call set up request message from an originating wireless device 102, the PTT server 112 identifies the targeted wireless devices 102 and sends a call announce message to each of the targeted wireless devices 102. The call announce message is sent from the PTT server 112 to the BS 104 serving the targeted wireless device 102. After the BS 104 receives the call announce message from a PTT server 112, the BS104 can transmit the call announce message to the targeted wireless device 102 through a traffic channel after locating the targeted wireless device 102. The BS 104 normally employs a ping message broadcasted to all the sectors within its coverage area to locate the targeted wireless device 102. When the targeted wireless device 102 receives the ping message, it sends a back a connection request message to the BS 104 and starts to bring up a traffic channel in preparation to receive a message from the BS 104. Alternatively, to speed up the process, the BS 104 can embed the received call announce message in a signaling message and broadcast the signaling message over the signaling channel to all the sectors. The call announce message, when received by the targeted wireless device 104, causes the targeted wireless device 102 to send a call accept message back to the BS 104.

Broadcasting the call announce message through a signaling channel to the targeted wireless device 102 speeds up the PTT call set up process when compared with broadcasting a ping message, then followed by transmitting the call announce message through the traffic channel. However,_the call announce message is usually in the format of an Internet Protocol (IP) data packet and its size is generally large. The call announce message can be up to 50 to 60 bytes in size that include IP header and payload; in comparison, a paging message is only one or two bytes long. Broadcasting such a large message through the signaling channel to all sectors covered by a BS 104 floods the entire coverage area, while the targeted wireless device 102 is located in only one of the sectors.

A BS 104 according to the invention avoids flooding its coverage area with a lengthy signaling message over a signaling channel and also prevents a targeted wireless device 102 from taking steps to bring up a traffic channel in preparation to receive a call announce message. The BS 104 locates the targeted wireless device 102, after receiving the call announce message from a PTT server 112, by first broadcasting a route update request message over the signaling channel to all the sectors covered by this BS 104. The route update request message is short message defined by the evaluation data only (EvDO) standard that supports wireless data connections. The route update request message is a short message and does not cause a receiving wireless device 102 to take any action to set up a traffic channel. Instead, the receiving wireless device 102 sends back a route update response message back to the BS 104. The route update response message is received by a BTS 114 and forwarded back to the BS 104. The identity of the BTS 114 reveals to the BS 104 the sector in which the wireless device is located. The BS 104 can then transmit a signaling message with the embedded call announce message to the sector of the wireless device 102 over the signaling channel.

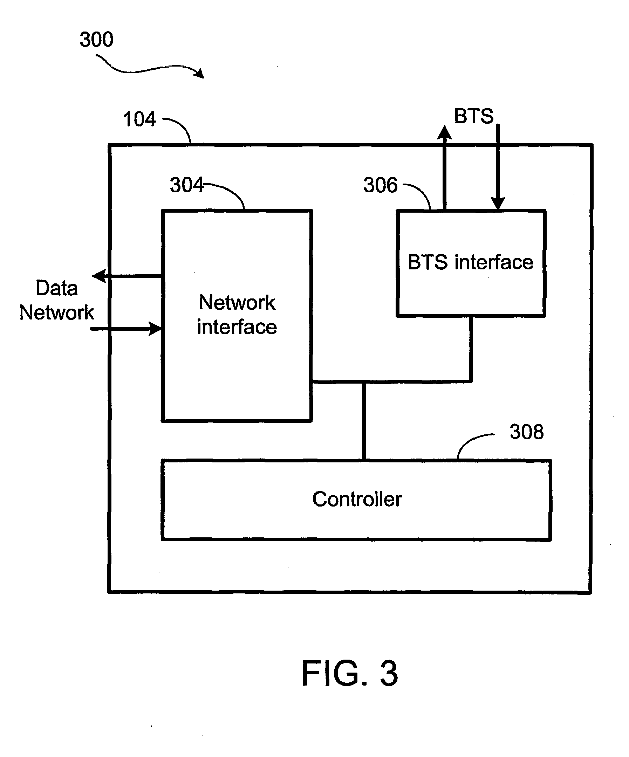

FIG. 3 is a simplified architecture 300 of a BS server 104 capable of receiving PTT related messages from a PTT server 112 over a data network and transmitting PTT related messages to BTS 114. The BS server 104 includes a network interface unit 304 for receiving data packets from the data network, a BTS interface unit 306 for sending PTT messages to BTS 114 where the PTT messages are transmitted in format of radio signals to wireless devices 102, and a controller unit 308. The BS 104 communicates with the PTT server 112 through the data network.

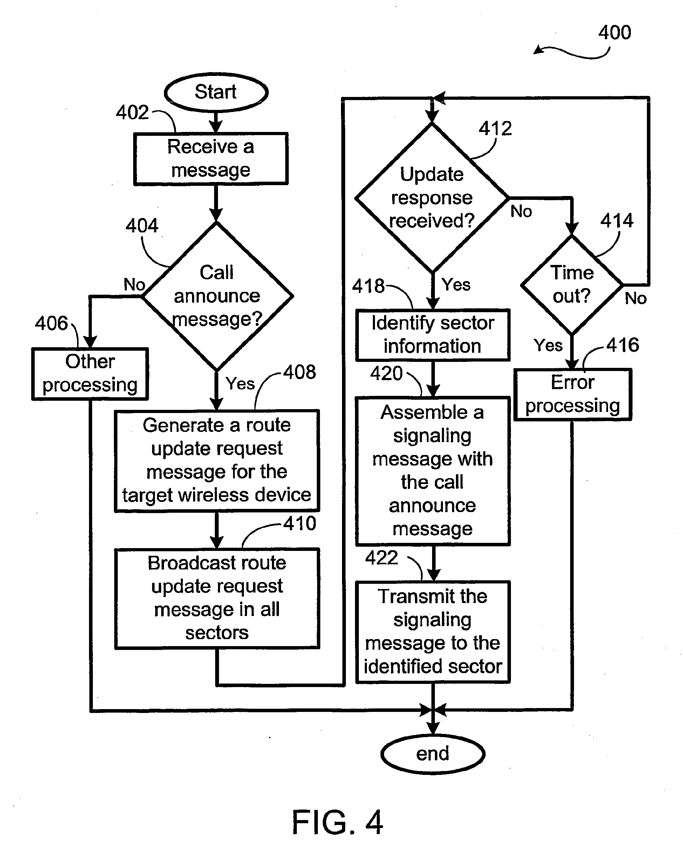

FIG. 4 is an exemplary flow chart 400 of a base station process according to one embodiment of the invention. The base station 104 receives a PTT message from the PTT server 112, step 402. When a PTT message is received, it is analyzed by the base station 104 whether it is a call announce message, step 404. The PTT messages are identified by their packet headers. If the PTT message is not a call announce message, the base station 104 proceeds to process the received PTT message normally, step 406. If the PTT message is a call announce message, the base station 104 generates a route update request message directed to the targeted wireless device 102, step 408, instead of broadcasting the call announce message over a signaling channel to all the sectors connected to the base station 104. After generating the route update request message, the base station 104 broadcasts the route update request message through all the BTS 114 connected to the base station 104, step 410. After broadcasting the route update request message, the base station 104 waits for a response, step 412. If no response is received and a time out occurs, the base station 104 proceeds to handle the error condition, step 416.

When a route update response message is delivered by one of the BTS 114, the base station 104 identifies the sector in which the wireless device 102 is located through the identity of the receiving BTS 114, step 418. After identifying the receiving BTS 114 and the sector associated with the receiving BTS 114, the base station 104 assembles a signaling message that embeds the call announce message, step 420, and transmits the signaling message over the signaling channel to the sector identified by the receiving BTs 114, step 422. The signaling message with the call announce message will be received by the targeted wireless device 102 over the signaling channel and subsequently the targeted wireless device 102 can send back a call accept message through the signaling channel back to the base station 104, which then forwards it to the PTT server 112.

Although the invention is described above in a PTT environment, the invention is not limited to PTT communications or limited to the call announce message or route update request message. In a broader sense, the invention enables transmission of IP data packets through a signaling channel in a wireless telecommunication network without transmission of the IP data packets to sectors where a targeted wireless device is not located, thus avoids flooding the network with unnecessary signaling messages. By first transmitting a signaling message that requests no action from the targeted wireless device except for sending a response back to the base station, the base station can learn in which sector the targeted device is located and then transmits the IP data packets within a signaling message through the signaling channel to this exact sector.

In view of the method being executable on a wireless service provider's computer device, the method can be performed by a program resident in a computer readable medium, where the program directs a server or other computer device having a computer platform to perform the steps of the method. The computer readable medium can be the memory of the server, or can be in a connective database. Further, the computer readable medium can be in a secondary storage media that is loadable onto a wireless communications device computer platform, such as a magnetic disk or tape, optical disk, hard disk, flash memory, or other storage media as is known in the art.

In the context of FIG. 4, the method may be implemented, for example, by operating portion(s) of the wireless network, such as a wireless communications device or the server, to execute a sequence of machine-readable instructions. Though the steps are illustrated in sequence, the method may be implemented in difference sequence or as an event driven process. The instructions can reside in various types of signal-bearing or data storage primary, secondary, or tertiary media. The media may comprise, for example, RAM (not shown) accessible by, or residing within, the components of the wireless network. Whether contained in RAM, a diskette, or other secondary storage media, the instructions may be stored on a variety of machine-readable data storage media, such as DASD storage (e.g., a conventional "hard drive" or a RAID array), magnetic tape, electronic read-only memory (e.g., ROM, EPROM, or EEPROM), flash memory cards, an optical storage device (e.g. CD-ROM, WORM, DVD, digital optical tape), paper "punch" cards, or other suitable data storage media including digital and analog transmission media.

While the invention has been particularly shown and described with reference to a preferred embodiment thereof, it will be understood by those skilled in the art that various changes in form and detail may be made without departing from the scope of the present invention as set forth in the following claims. For example, the description above is based on an audio PTT communication, it is understood the apparatus, system, and method can be easily modified to support other type of media, such as video, data, etc. Furthermore, although elements of the invention may be described or claimed in the singular, the plural is contemplated unless limitation to the singular is explicitly stated.

## Claims

1. A method for determining a sector location of a wireless communication device and transmitting data from a base station to the wireless communication device? the device being adapted to selectively establish dedicated data access channels over a signaling channel in a wireless communication network, said determination being made without establishing a dedicated data access channel, said method comprising the steps of:
broadcasting a broadcast message over a signaling channel from the base station to a plurality of sectors in communication with the base station (410);
receiving an acknowledgment from the wireless communication device, the acknowledgment being delivered with a sector location information (412); **characterized by**
transmitting data for the wireless communication device over a signaling channel from the base station to a sector identified by the sector location information (422).

2. A method for determining a sector location of a wireless communication device and transmitting data from a base station to the wireless communication device, the device being adapted to selectively establish dedicated data access channels over a signaling channel in a wireless communication network, said the determination made without establishing a dedicated data access channel, the method comprising the steps of:
receiving a broadcast message at the wireless communication device, the wireless telecommunication device refraining from setting up a dedicated data access channel between the wireless communication device and the base station due to the receipt of the broadcast message;
sending an acknowledgement from the wireless communication device, the acknowledgment being delivered with a sector location information; (412)
receiving data at the wireless communication device over the signaling channel from the base station at a sector identified by the sector location information.

3. The method of claim 1 or 2, wherein the data being at least one Internet Protocol (IP) data packet.

4. The method of claim 1 or 2, wherein the broadcast message is a route update request message.

5. The method of claim 1 or 2, wherein the data being a push-to-talk (PTT) message.

6. The method of claim 4, wherein the PTT message is an announce message.

7. The method of claim 4, further comprising the step for embedding the PTT message in a signaling message.

8. A computer-readable medium on which is stored a computer program including instructions adapted to perform, when executed, a method according to any of the claims 1 to 7.

9. A computer program including instructions adapted to perform, when executed, a method according to any of the claims 1 to 7.

10. An apparatus for determining a sector location of a wireless communication device and transmitting data from a base station to the wireless communication device over a signaling channel in a wireless communication network without establishing a dedicated data access channel, comprising:
means for receiving a first message from a data network, the message being addressed to a wireless communication device;
means for analyzing the first message; and
means for communicating with the wireless communication device through radio signals,
wherein the means for analyzing, in response to the first message, are adapted to broadcast a second message to a plurality of sectors in communications with the apparatus (410) broadcasting the second message causing a third message to be received at the apparatus from the wireless communication device, the third message being delivered with a sector information, (412) wherein
the means for analyzing, in response to the third message, are adapted to transmit the first message over a signaling channel to a sector identified by the sector information.

11. An apparatus for receiving data from a base station over a signaling channel in a wireless communication network without establishing a dedicated data access channel, comprising:
means for receiving a broadcast message, the wireless telecommunication network refraining from setting up a dedicated data access channel between the apparatus and the base station due to the receipt of the broadcast message;
means for sending an acknowledgement, the acknowledgment being delivered with a sector location information;
means for receiving data at the apparatus over the signaling channel from the base station at a sector identified by the sector location information.

12. The apparatus of claim 10 or 11, wherein the first message is a push-to- talk (PTT) message.

13. The apparatus of claim 12, wherein the PTT message is a PTT call announce message.

14. The apparatus of claim 10 or 11, wherein the second message is a route update request message.

15. The apparatus of claim 10, wherein the second message does not cause the wireless communication device to establish a data access channel to the apparatus.

16. The apparatus of claims 10 and 12 to 15_{,}
wherein the means for receiving comprise a network interface unit (304);
wherein the means for analyzing comprise a controller unit (308); and
wherein the means for communicating with the wireless communication device comprise a radio interface unit (306).

## Patentansprüche

1. Verfahren zum Bestimmen eines Sektor-Orts eines drahtlosen Kommunikationsgeräts und zum Übertragen von Daten von einer Basisstation an das drahtlose Kommunikationsgerät, wobei das Gerät angepasst ist zum selektiven Aufbauen von dedizierten Datenzugangskanälen über einen Signalisierungskanal in einem drahtlosen Kommunikationsnetzwerk, wobei das Bestimmen ohne Aufbau eines dedizierten Datenzugangskanals erfolgt, wobei das Verfahren die folgenden Schritte aufweist:
Aussenden einer Sammelnachricht über einen Signalisierungskanal von einer Basisstation an eine Mehrzahl von Sektoren, die in Kommunikation mit der Basisstation stehen (410);
Empfangen einer Bestätigung von dem drahtlosen Kommunikationsgerät, wobei die Bestätigung mit einer Sektor-Ortsinformation geliefert wird (412); **gekennzeichnet durch**
Übertragen von Daten an das drahtlose Kommunikationsgerät über einen Signalisierungskanal von der Basisstation an einen Sektor, der **durch** die Sektor-Ortsinformation identifiziert wird (422).

2. Verfahren zum Bestimmen eines Sektor-Orts eines drahtlosen Kommunikationsgeräts und zum Übertragen von einer Basisstation an das drahtlose Kommunikationsgerät, wobei das Gerät angepasst ist zum selektiven Aufbau von dedizierten Datenzugangskanälen über einen Signalisierungskanal in einem drahtlosen Kommunikationsnetzwerk, wobei das Bestimmen ohne Aufbau eines dedizierten Datenzugangskanals erfolgt, wobei das Verfahren die folgenden Schritte aufweist:
Empfangen einer Sammelnachricht bei dem drahtlosen Kommunikationsgerät, wobei das drahtlose Kommunikationsgerät es aufgrund des Erhalts der Sammelnachricht unterlässt, einen dedizierten Datenzugangskanal zwischen dem drahtlosen Kommunikationsgerät und der Basisstation aufzubauen;
Senden einer Bestätigung von dem drahtlosen Kommunikationsgerät, wobei die Bestätigung mit einer Sektor-Ortsinformation geliefert wird (412);
Empfangen von Daten bei dem drahtlosen Kommunikationsgerät über einen Signalisierungskanal von der Basisstation in einem Sektor, der durch die Sektor-Ortsinformation identifiziert wird.

3. Verfahren nach Anspruch 1 oder 2, wobei die Daten mindestens ein Internet-Protokoll-Datenpaket (IP) aufweisen.

4. Verfahren nach Anspruch 1 oder 2, wobei die Sammelnachricht eine Route Update Request Message ist.

5. Verfahren nach Anspruch 1 oder 2, wobei die Daten eine push-to-talk-Nachricht (PTT) sind.

6. Verfahren nach Anspruch 4, wobei die PTT-Nachricht eine announce message ist.

7. Verfahren nach Anspruch 4, weiterhin aufweisend den Schritt des Einbettens der PTT-Nachricht in eine Signalisierungsnachricht.

8. Computerlesbares Medium, auf dem ein Computerprogramm gespeichert ist, aufweisend angepasste Anweisungen zum Durchführen, wenn ausgeführt, eines Verfahrens nach einem der Ansprüche 1-7.

9. Computerprogramm, aufweisend angepasste Anweisungen zum Durchführen, wenn ausgeführt, eines Verfahrens nach einem der Ansprüche 1-7.

10. Vorrichtung zum Bestimmen eines Sektor-Orts eines drahtlosen Kommunikationsgeräts und Übertragen von Daten von einer Basisstation an das drahtlose Kommunikationsgerät über einen Signalisierungskanal in einem drahtlosen Kommunikationsnetzwerk, ohne dabei einen dedizierten Datenzugangskanal aufzubauen, aufweisend:
Mittel zum Empfangen einer ersten Nachricht von einem Datennetzwerk, wobei die Nachricht an ein drahtloses Kommunikationsgerät adressiert ist;
Mittel zum Analysieren der ersten Nachricht; und
Mittel zum Kommunizieren mit dem drahtlosen Kommunikationsgerät mittels Funksignalen;
wobei die Mittel zum Analysieren, als Antwort auf die erste Nachricht, angepasst sind zum Ausstrahlen einer zweiten Nachricht an eine Mehrzahl von Sektoren, die in Kommunikation mit der Vorrichtung stehen (410), Ausstrahlen der zweiten Nachricht, die bewirkt, dass eine dritte Nachricht bei der Vorrichtung von dem drahtlosen Kommunikationsgerät empfangen wird, wobei die dritte Nachricht mit einer Sektor-Information geliefert wird (412), wobei die Mittel zum Analysieren, in Antwort auf die dritte Nachricht, angepasst sind zum Übertragen der ersten Nachricht über einen Signalisierungskanal an einen Sektor, der durch die Sektor-Information identifiziert wird.

11. Vorrichtung zum Empfangen von Daten an einer Basisstation über einen Signalisierungskanal in einem drahtlosen Kommunikationsnetzwerk ohne Aufbau eines dedizierten Datenzugangskanals, aufweisend:
Mittel zum Empfangen einer Sammelnachricht, wobei das drahtlose Kommunikationsnetzwerk es aufgrund des Empfangs der Sammelnachricht unterlässt, einen dedizierten Datenzugangskanal zwischen der Vorrichtung und der Basisstation aufzubauen;
Mittel zum Senden einer Bestätigung, wobei die Bestätigung mit einer Sektor-Ortsinformation geliefert wird;
Mittel zum Empfangen von Daten bei der Vorrichtung über den Signalisierungskanal von der Basisstation in einem Sektor, der durch die Sektor-Ortsinformation identifiziert wird.

12. Verfahren nach Anspruch 10 oder 11, wobei die erste Nachricht eine push-to-talk-Nachricht (PTT) ist.

13. Vorrichtung nach Anspruch 12, wobei die PTT-Nachricht eine PTT call announce message ist.

14. Vorrichtung nach Anspruch 10 oder 11, wobei die zweite Nachricht eine Route Update Request Message ist.

15. Vorrichtung nach Anspruch 10, wobei die zweite Nachricht das drahtlose Kommunikationsgerät nicht zum Aufbau eines Datenzugangskanals an die Vorrichtung veranlasst.

16. Vorrichtung nach Anspruch 10 und 12-15,
wobei die Mittel zum Empfangen eine Netzwerkschnittstelleneinheit (304) umfassen;
wobei die Mittel zum Analysieren eine Controller-Einheit (308) umfassen; und
wobei die Mittel zum Kommunizieren mit dem drahtlosen Kommunikationsgerät eine Funkschnittstelleneinheit (306) umfassen.

## Revendications

1. Un procédé de détermination d'un emplacement de secteur d'un dispositif de communication sans fil et d'émission des données depuis une station de base vers le dispositif de communication sans fil, le dispositif étant apte à sélectivement établir des canaux d'accès de données dédiés sur un canal de signalisation dans un réseau de communication sans fil, ladite détermination étant opérée sans établir de canal d'accès de données dédié, ledit procédé comprenant les étapes suivantes :
diffusion d'un message diffusé sur un canal de signalisation depuis la station de base vers une pluralité de secteurs en communication avec la station de base (410) ;
réception d'un accusé de réception venant du dispositif de communication sans fil, l'accusé de réception étant délivré avec une information d'emplacement de secteur (412) ; **caractérisé par**
l'émission de données pour le dispositif de communication sans fil sur un canal de signalisation depuis la station de base vers un secteur identifié par l'information d'emplacement de secteur (422).

2. Un procédé de détermination d'un emplacement de secteur d'un dispositif de communication sans fil et d'émission de données depuis une station de base vers le dispositif de communication sans fil, le dispositif étant apte à sélectivement établir des canaux d'accès de données dédiés sur un canal de signalisation dans un réseau de communication sans fil, ladite détermination étant opérée sans établir de canal d'accès de données dédié, ledit procédé comprenant les étapes suivantes :
réception par le dispositif de communication sans fil d'un message diffusé, le dispositif de télécommunication sans fil s'abstenant d'établir un canal d'accès de données dédié entre le dispositif de communication sans fil et la station de base du fait de la réception du message diffusé ;
envoi d'un accusé de réception venant du dispositif de communication sans fil, l'accusé de réception étant délivré avec une information d'emplacement de secteur (412) ; réception par le dispositif de communication sans fil de données sur le canal de signalisation depuis la station de base à un secteur identifié par l'information d'emplacement de secteur.

3. Le procédé de la revendication 1 ou 2, dans lequel les données sont au moins un paquet de données de protocole internet (IP).

4. Le procédé de la revendication 1 ou 2, dans lequel le message diffusé est un message de requête de mise à jour d'itinéraire.

5. Le procédé de la revendication 1 ou 2, dans lequel les données sont un message *push-to-talk* (PTT).

6. Le procédé de la revendication 4, dans lequel le message PTT est un message d'annonce.

7. Le procédé de la revendication 4, comprenant en outre l'étape d'incorporation du message PTT dans un message de signalisation.

8. Un support lisible par ordinateur sur lequel est stocké un programme informatique comprenant des instructions aptes à mettre en oeuvre, lorsqu'elles sont exécutées, un procédé selon l'une des revendications 1 à 7.

9. Un programme informatique comprenant des instructions aptes à mettre en oeuvre, lorsqu'elles sont exécutées, un procédé selon l'une des revendications 1 à 7.

10. Un appareil de détermination d'un emplacement de secteur d'un dispositif de communication sans fil et d'émission des données depuis une station de base vers le dispositif de communication sans fil sur un canal de signalisation dans un réseau de communication sans fil sans établir de canal d'accès de données dédié, comprenant :
des moyens de réception d'un premier message provenant d'un réseau de données, le message étant adressé à un dispositif de communication sans fil ;
des moyens d'analyse du premier message ; et des moyens de communication avec le dispositif de communication sans fil au travers de signaux radio,
dans lequel les moyens d'analyse, en réponse au premier message, sont aptes à diffuser un second message vers une pluralité de secteurs en communication avec l'appareil (410) diffusant le second message provoquant la réception d'un troisième message par l'appareil depuis le dispositif de communication sans fil, le troisième message étant délivré avec une information de secteur (412),
dans lequel les moyens d'analyse, en réponse au troisième message, sont aptes à émettre le premier message sur un canal de signalisation vers un secteur identifié par l'information de secteur.

11. Un appareil pour recevoir des données provenant d'une station de base sur un canal de signalisation dans un réseau de communication sans fil sans établir de canal d'accès de données dédiée, comprenant :
des moyens de réception d'un message diffusé, le réseau de télécommunication sans fil s'abstenant d'établir un canal d'accès de données dédié entre l'appareil et la station de base du fait de la réception du message diffusé ;
des moyens d'envoi d'un accusé de réception, l'accusé de réception étant délivré avec une information d'emplacement de secteur ;
des moyens de réception par l'appareil sur le canal de signalisation de données en provenance de la station de base à l'endroit d'un secteur identifié par l'information d'emplacement de secteur.

12. L'appareil de la revendication 10 ou 11, dans lequel le premier message est un message *push-to-talk* (PTT).

13. L'appareil de la revendication 12, dans lequel le message PTT est un message d'annonce d'appel PTT.

14. L'appareil de la revendication 10 ou 11, dans lequel le second message est un message de requête de mise à jour d'itinéraire.

15. L'appareil de la revendication 10, dans lequel le second message ne provoque pas l'établissement par le dispositif de communication sans fil d'un canal d'accès de données vers l'appareil. 16. L'appareil des revendications 10 et 12 à 15,
dans lequel les moyens de réception comprennent une unité d'interface réseau (304) ;
dans lequel les moyens d'analyse comprennent une unité de contrôleur (308) ; et
dans lequel les moyens de communication avec le dispositif de communication sans fil comprennent une unité d'interface radio (306).
